# EUROPEAN PATENT APPLICATION

(11) **EP 4 691 705 A1**
(43) Date of publication of application: **11.02.2026**
(21) Application number: 23930678.0
(22) Date of filing: 31.03.2023
(51) Int. Cl.: B25J 13/08

(54) **FOREIGN MATTER REMOVAL DEVICE AND FOREIGN MATTER REMOVAL METHOD**

(71) Applicant: Fuji Corporation, Chiryu-shi, Aichi 472-8686 (JP)
(72) Inventor: KONDO, Hironori, Chiryu-shi, Aichi 472-8686 (JP)
(74) Representative: Grünecker Patent- und Rechtsanwälte PartG mbB
(86) International application number: PCT/JP2023/013638
(87) International publication number: WO 2024/202044

(57) **Abstract**

A foreign matter removal device according to the present disclosure includes a detection section configured to detect an object conveyed in a conveyance direction by a conveyance device, a removal section configured to grip, using a collection member, a foreign matter contained in a target object conveyed in the conveyance direction by the conveyance device, and a control section configured to, when a material of the foreign matter detected by the detection section is soft, cause the collection member to grip the foreign matter with a pinch width that is an opening width of the collection member based on a provision different from a provision when the foreign matter is not soft, and/or cause the collection member to grip the foreign matter with a pinch press-in amount that is a press-in amount of the collection member based on a provision different from a provision when the foreign matter is not soft.

## Description

### Technical Field

The present description discloses a foreign matter removal device and a foreign matter removal method.

### Background Art

Conventionally, as a recycling device, for example, there has been proposed a recycling device including: a picking robot that conveys a target object from a conveyance source to a conveyance destination; and a robot hand that is connected to the picking robot and that grips, as the target object, a smelting raw material containing valuable metals that can be processed in a smelting process or an off-system raw material to be sent to the outside of the smelting process from among electronic component scraps (for example, see Patent Literature 1). In this recycling device, the robot hand includes a suction pad that suctions the target object and a clamping section that clamps the target object suctioned by the suction pad, and the electronic component scraps can be sorted more efficiently.

### Citation List

### Patent Literature

Patent Literature 1:JP-A-2021-186921

### Summary of the Invention

### Technical Problem

However, in the device disclosed in Patent Literature 1, when the target object is collected by the picking robot, an object existing around the target object may be caught. For example, even in a foreign matter removal device that removes a foreign matter existing in a target object, the target object may also be gripped when gripping the foreign matter, similarly to the recycling device disclosed in Patent Literature 1 described above. As described above, in the foreign matter removal device, it has been required not to collect the target object as much as possible when removing the foreign matter present in the target object.

The present disclosure has been made to solve such a problem, and a main object of the present disclosure is to provide a foreign matter removal device and a foreign matter removal method that can further reduce collection of a target object when removing a foreign matter from the target object.

The present disclosure employs the following means in order to achieve the main object described above.

That is, the present description discloses a foreign matter removal device including:
a detection section configured to detect an object conveyed in a conveyance direction by a conveyance device;
a removal section configured to grip, using a collection member, a foreign matter contained in a target object conveyed in the conveyance direction by the conveyance device; and
a control section configured to, when a material of the foreign matter detected by the detection section is soft, cause the collection member to grip the foreign matter with a pinch width that is an opening width of the collection member based on a provision different from a provision when the foreign matter is not soft, and/or cause the collection member to grip the foreign matter with a pinch press-in amount that is a press-in amount of the collection member based on a provision different from a provision when the foreign matter is not soft.

In this foreign matter removal device, when the material of the foreign matter is soft, the foreign matter is gripped to be pinched up by using the opening width of the collection member as the pinch width, so that the soft foreign matter can be gripped more reliably, and an object other than the foreign matter is less likely to be collected. Alternatively, in this foreign matter removal device, when the material of the foreign matter is soft, most of the foreign matters has a small thickness, and thus the foreign matter is gripped to be pinched up by using the press-in amount of the collection member as the pinch press-in amount, so that the soft foreign matter can be gripped more reliably, and an object other than the foreign matter is less likely to be collected. Therefore, with the foreign matter removal device, it is possible to further reduce the collection of the target object when removing the foreign matter from the target object.

### Brief Description of Drawings

Fig. 1 is a diagram illustrating an example of a configuration of processing system 10.
Fig. 2 is a diagram illustrating an example of a schematic configuration of foreign matter removal device 30.
Fig. 3 is a perspective view illustrating an example of a schematic configuration of removal section 40.
Fig. 4 is a diagram illustrating an example of captured images 71 and 72 of detection section 31.
Fig. 5 is a diagram illustrating an example of condition information 53 stored in storage section 52.
Fig. 6 is a flowchart illustrating an example of a foreign matter removal process routine.
Fig. 7 is a flowchart illustrating an example of a removal process routine.
Fig. 8 is a diagram illustrating collection of hard foreign matter 14A.
Fig. 9 is a diagram illustrating collection of soft, non-plant foreign matter 14B.
Fig. 10 is a diagram illustrating collection of foreign matter 14C of a soft plant.

### Description of Embodiments

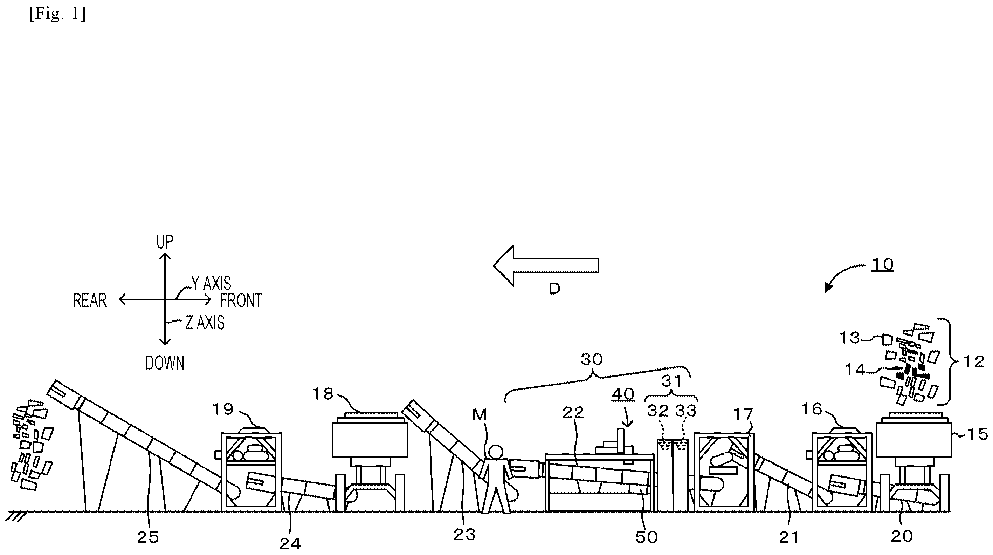

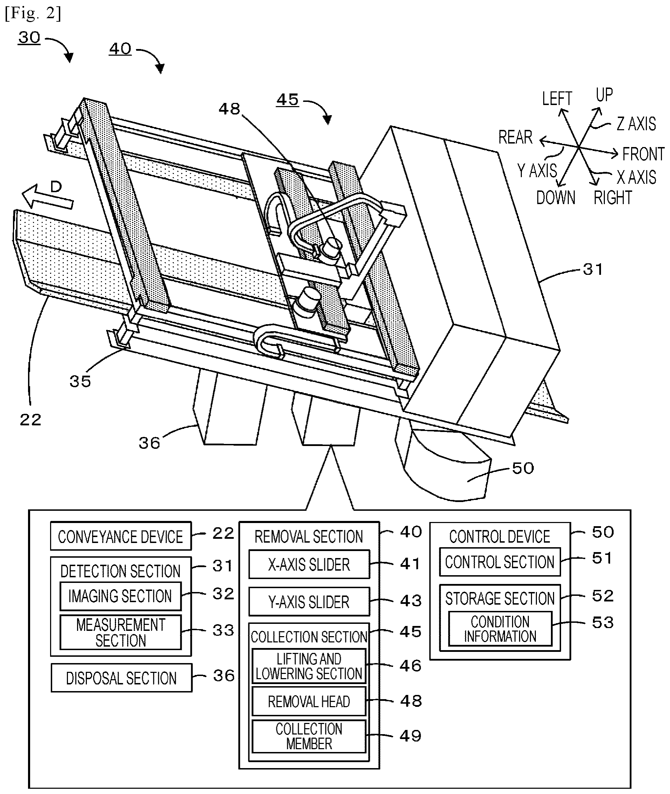

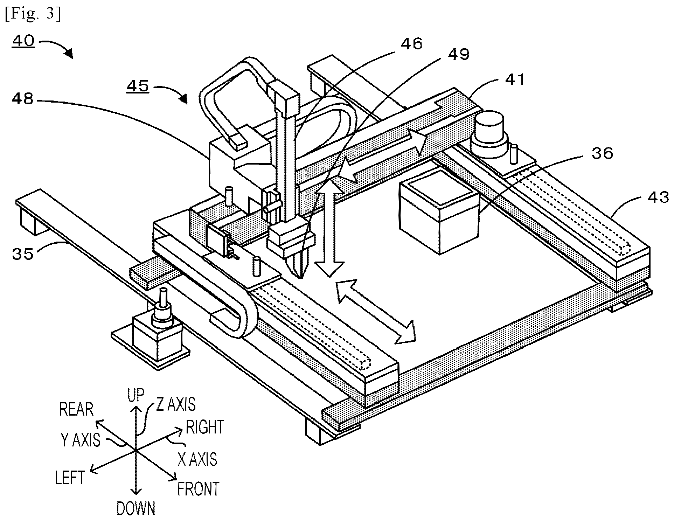

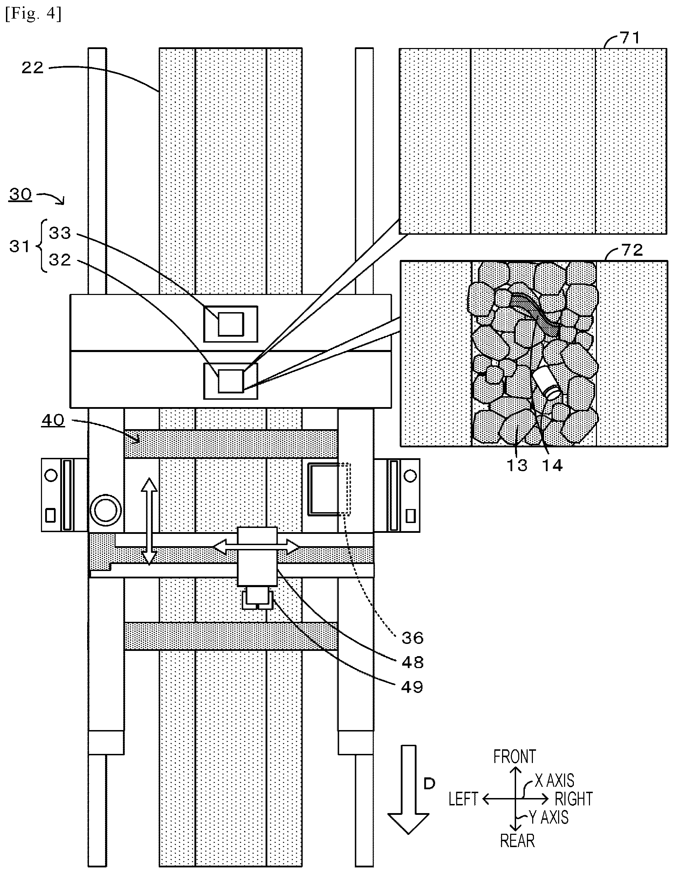

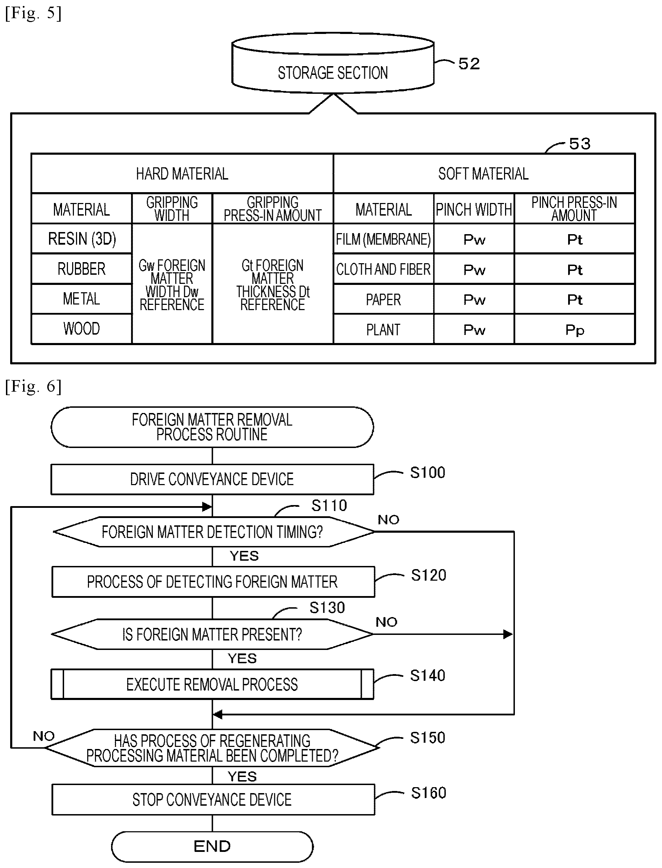

An embodiment of the present disclosure will be described with reference to the drawings. Fig. 1 is a diagram illustrating an example of a configuration of processing system 10 that executes a process of recycling a waste material as an example. Fig. 2 is a diagram illustrating an example of a schematic configuration of foreign matter removal device 30. Fig. 3 is a perspective view illustrating an example of a schematic configuration of removal section 40. Fig. 4 is a diagram illustrating a plan view of removal section 40 and an example of captured images 71 and 72 captured by detection section 31. Fig. 5 is a diagram illustrating an example of condition information 53 stored in storage section 52 of control device 50. In the present embodiment, a left-right direction, a front-rear direction, and an up-down direction are as illustrated in Figs. 1 to 4 and 8 to 10. In the present embodiment, a direction in which processing material 12 as a processing target is conveyed is referred to as conveyance direction D.

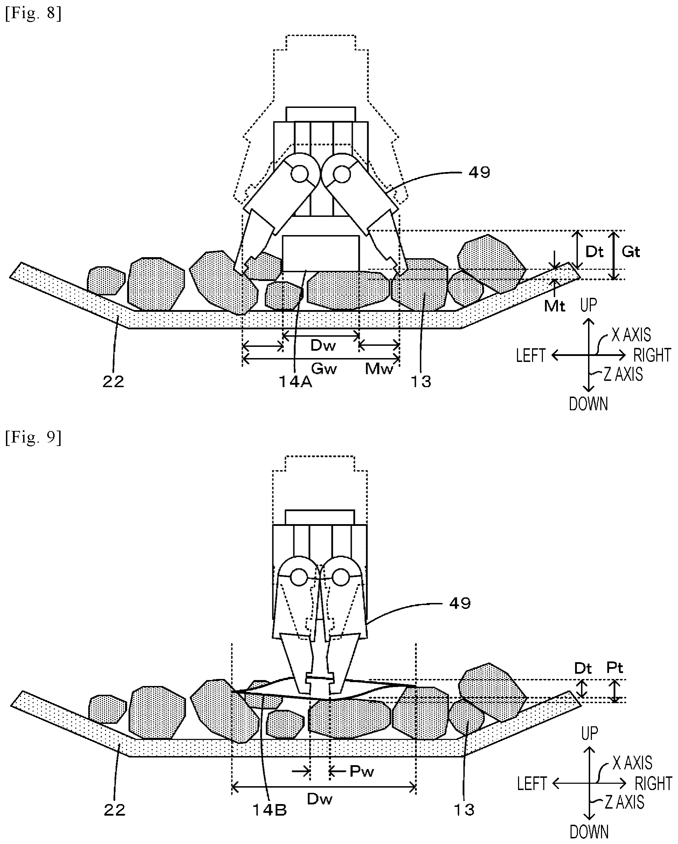

Processing material 12 as a target object that is processed by processing system 10 is a mixture obtained by mixing waste material 13, which is a target for recycling such as stone, sand, and concrete, with foreign matter 14 including paper, resin, wood, metal, or the like. Foreign matter 14 includes foreign matter 14A that is a non-soft three-dimensional object, foreign matter 14B that is a soft object other than a plant such as lawn grass, foreign matter 14C that is a soft plant, and the like (see Fig. 8 to 10 described later). Foreign matter 14C of the plant does not include raw wood, wood, and the like that are not soft. Here, foreign matters 14A to 14C are simply collectively referred to as foreign matter 14. A size of foreign matter 14 includes a length, width Dw, thickness Dt, and the like, and when foreign matter 14 has a long side and a short side in a horizontal direction, the short side is defined as width Dw, and the length in the up-down direction is defined as thickness Dt. As illustrated in Fig. 1, processing system 10 includes primary crusher 15, primary magnetic separator 16, screen machine 17, foreign matter removal device 30, secondary crusher 18, secondary magnetic separator 19, and conveyance devices 20 to 25.

Primary crusher 15 is a device that primarily crushes processing material 12 as a raw material. Primary crusher 15 crushes processing material 12 such that processing material 12 has, for example, a size equal to or smaller than a predetermined primary size (for example, 40 cm or less). Primary magnetic separator 16 is a device that removes the foreign matter which is magnetic material contained in processing material 12 by means of a magnetic force. Screen machine 17 is a device that separates processing material 12 having a size equal to or larger than the primary size and processing material 12 having a size smaller than the primary size, by causing processing material 12 to pass over a mesh, for example. Secondary crusher 18 is a device that secondarily crushes processing material 12 to a smaller size than in primary crusher 15. Secondary crusher 18 crushes processing material 12 such that processing material 12 has a size equal to or smaller than a predetermined secondary size (for example, 10 cm or less). Secondary magnetic separator 19 is a device that removes the magnetic material, which is not fully removed by primary magnetic separator 16 and foreign matter removal device 30, from processing material 12.

Conveyance devices 20 to 25 as conveyance lines are devices that place processing material 12 on a conveyance path and convey processing material 12 along conveyance direction D, and are configured as, for example, belt conveyors. Conveyance devices 20 to 25 may have configurations other than the belt conveyor as long as processing material 12 is conveyed.

Foreign matter removal device 30 is a device that places processing material 12 including waste material 13 and foreign matter 14 on a conveyance surface of conveyance device 22, conveys processing material 12, and collects, for removal, foreign matter 14 from waste material 13 as the target object. As illustrated in Fig. 2, foreign matter removal device 30 includes detection section 31, removal section 40, and control device 50. Foreign matter removal device 30 includes disposal section 36. Conveyance device 22 places processing material 12 on the conveyance surface and conveys processing material 12 at a predetermined conveyance speed.

Detection section 31 is a device that detects waste material 13 and foreign matter 14 as objects conveyed in conveyance direction D by conveyance device 22. Detection section 31 is arranged upstream of removal section 40 in conveyance direction D. Detection section 31 includes imaging section 32 that captures an image of processing material 12 containing waste material 13 and foreign matter 14 conveyed by conveyance section 22, and measurement section 33 that measures a height of processing material 12. Imaging section 32 is configured as, for example, a camera that captures an image of processing material 12 conveyed by being placed on the conveyance surface of conveyance device 22. Image section 32 captures an image of a predetermined range including processing material 12 from above the conveyance surface of conveyance device 22, and outputs image data to control device 50. As illustrated in Fig. 4, imaging section 32 captures captured images 71 and 72 including waste material 13 and foreign matter 14. Captured image 71 is an example of an image in a state where processing material 12 is not conveyed onto conveyance device 22. Captured image 72 is an example of an image in a state where processing material 12 or foreign matter 14 is conveyed onto conveyance device 22. Measurement section 33 detects the height of processing material 12 or the like on conveyance device 22. Measurement section 33 may be provided, for example, upstream of removal section 40 in conveyance direction D, and may be configured as a stereo camera including two cameras. Alternatively, measurement section 33 may be a sensor that detects a reflected wave obtained by irradiating the conveyance surface and obtains a height of a reflection position. Imaging section 32 or measurement section 33 is held above the conveyance surface of conveyance device 22 by a holding member provided to straddle conveyance device 22 in the left-right direction. Measurement section 33 outputs information on the detected height of processing material 12 to control device 50. Foreign matter removal device 30 including measurement section 33 can perform conveyance control of processing material 12 using information on a height direction of processing material 12. Meanwhile, either imaging section 32 or measurement section 33 may be omitted in foreign matter removal device 30 as long as the height of processing material 12 can be measured.

Disposal section 36 is a dust box as an accommodation section that accommodates foreign matter 14. Foreign matter 14 collected by collection section 45 of removal section 40 is dropped into disposal section 36. Disposal section 36 may include multiple accommodation containers and may perform sorting in accordance with the weight and the material of foreign matter 14.

Removal section 40 is a device that collects and removes, using collection member 49, foreign matter 14 or the like contained in processing material 12 conveyed in conveyance direction D on the conveyance path by conveyance device 22. Removal section 40 is configured as, for example, an XY robot. Removal section 40 detects and removes foreign matter 14 present in processing material 12 based on the captured image captured by imaging section 32. Removal section 40 is provided downstream of detection section 31 in conveyance direction D. Removal section 40 includes X-axis slider 41, Y-axis slider 43, and collection section 45. Removal section 40 disposes of collected foreign matter 14 to disposal section 36 arranged on a side of conveyance device 22. Removal section 40 may have another configuration, such as an articulated arm robot.

X-axis slider 41 includes a drive mechanism. The drive mechanism includes a guide rail that is installed along a direction perpendicular to conveyance direction D of conveyance device 22, a slider that moves along the guide rail, and a drive motor that drives the slider. The guide rail is fixed to the slider of Y-axis slider 43 installed on conveyance section 22 along conveyance direction D. Removal head 48, which is provided with lifting and lowering section 46, is fixed to the slider of X-axis slider 41. The drive mechanism may be, for example, a linear motion mechanism employing a ball screw including a screw shaft and a nut. The drive mechanism is not particularly limited as long as the drive mechanism is a linear motion mechanism, and may be a linear motor or the like. On X-axis slider 41, removal head 48 is moved by the drive mechanism along an X-axis direction. Y-axis slider 43 includes a drive mechanism. The drive mechanism includes a guide rail that is installed along conveyance direction D, a slider that moves along the guide rail, and a drive motor that drives the slider. The guide rail is fixed to support section 35 installed on conveyance section 22 along conveyance direction D. X-axis slider 41 is arranged on the slider of Y-axis slider 43. On Y-axis slider 43, X-axis slider 41 is moved by the drive mechanism along a Y-axis direction.

Collection section 45 is a unit that collects the object such as foreign matter 14 using collection member 49, and includes, for example, lifting and lowering section 46, removal head 48, and collection section 45. Lifting and lowering section 46 is a drive mechanism fixed to removal head 48 arranged on X-axis slider 41, and lifts and lowers collection section 45 along a Z-axis direction. The drive mechanism may be similar to the drive mechanism of X-axis slider 41 or Y-axis slider 43. Collection member 49 is a member that collects the object, and may be a gripping claw that grips the object. Collection section 45 grips and releases foreign matter 14 by an opening/closing operation of collection member 49 to collect and remove foreign matter 14 from processing material 12, and includes collection member 49 and a gripping drive section (not illustrated). The gripping drive section opens and closes collection member 49. Collection section 45 is moved in the X, Y, and Z directions within a predetermined range of conveyance section 22, by X-axis slider 41, Y-axis slider 43, and lifting and lowering section 46. Collection section 45 causes collection member 49 to grip foreign matter 14 along a width direction corresponding to the short side of foreign matter 14, to reduce an opening/closing width of collection member 49.

Control device 50 is a device that controls entire foreign matter removal device 30, and includes control section 51 and storage section 52. Control section 51 is configured as a microprocessor centered around CPU, and controls the entire device. Control section 51 outputs control signals to detection section 31 and removal section 40, and inputs signals from detection section 31 and removal section 40. Storage section 52 is a storage medium that stores information and includes, for example, HDD or a flash memory. Storage section 52 stores, for example, condition information 53 and the like as information on the collection of the foreign matter.

In condition information 53, a type of foreign matter 14 and a collection condition thereof are associated with each other. Types of foreign matter 14 in condition information 53 include a soft material and a hard material that is not a soft material. Examples of the hard material include a resin that is a three-dimensional object, rubber that is a three-dimensional object, metal, and wood. A material of the resin is not particularly limited as long as the resin is a three-dimensional object, and examples thereof include polyethylene terephthalate, polyethylene, and vinyl chloride. Examples of the metal include a wire and a metal wire. Examples of the wood include raw wood and molded wood. Examples of the soft material include a film-shaped resin, cloth, a fiber, paper, and a plant. The material of the resin is not particularly limited as long as the resin has a film shape, and examples thereof include polyvinyl. Examples of the plant include lawn grass and grass. In condition information 53, the material of foreign matter 14 is associated with opening width W of collection member 49 and press-in amount P of collection member 49 in the Z-axis direction. In condition information 53, when foreign matter 14 is the hard material, gripping width Gw based on width Dw of foreign matter 14 is set for opening width W, and gripping press-in amount Gt based on thickness Dt of foreign matter 14 is set for press-in amount P. Further, in condition information 53, when foreign matter 14 is the soft material, pinch width Pw based on a provision different from gripping width Gw of the hard material is set as a basic value for opening width W. Pinch width Pw may be a predetermined fixed value. It is assumed that pinch width Pw is set to a fixed value obtained by an experiment such that thin paper, fiber, resin, or the like having a film shape or the like can be more reliably pinched up when being gripped by collection member 49. Pinch width Pw may be, for example, a predetermined value in a range of 2 cm or more and 15 cm or less. Further, in condition information 53, when foreign matter 14 is a soft, non-plant material, first pinch press-in amount Pt based on a provision different from gripping press-in amount Gt of the hard material is set as a basic value for press-in amount P. First pinch press-in amount Pt may be a predetermined fixed value. It is assumed that first pinch press-in amount Pt is set to a relatively small fixed value obtained by an experiment such that thin paper, fiber, resin, or the like having a film shape or the like can be more reliably pinched up when collection member 49 is pressed. First pinch press-in amount Pt may be, for example, a predetermined value in a range of 5 cm or more and 15 cm or less. Further, in condition information 53, when foreign matter 14 is the soft material and is the plant, second pinch press-in amount Pp larger than first pinch press-in amount Pt is set as a basic value for press-in amount P. Second pinch press-in amount Pp may be a predetermined fixed value. Second pinch press-in amount Pp may be, for example, a predetermined value in a range of 15 cm or more and 25 cm or less. In a plant in which tearing or the like is likely to occur during gripping or moving, a larger press-in amount is set as compared with other soft materials, and more reliable collection can be performed. First pinch press-in amount Pt and second pinch press-in amount Pp are collectively referred to as pinch press-in amounts.

Next, an operation of foreign matter removal device 30 configured as described above will be described. First, a process of removing foreign matter 14 from processing material 12 to produce waste material 13 will be described. Fig. 6 is a flowchart illustrating an example of a foreign matter removal process routine executed by control section 51 of control device 50. This routine is stored in storage section 52, and is executed by control section 51 after foreign matter removal device 30 is activated based on the operation input on the operation panel. When this routine is started, control section 51 first drives conveyance device 22 (S100), and determines whether a foreign matter detection timing has arrived (S110). The foreign matter detection timing may be, for example, a timing after imaging section 32 captures an image of processing material 12 conveyed on the conveyance path of conveyance device 22. Imaging section 32 may capture an image of the conveyance path with a seamless image.

When the foreign matter detection timing has arrived in S110, control section 51 performs a process of detecting waste material 13 and foreign matter 14 based on the captured image captured by imaging section 32 and a height value measured by measurement section 33 (S120). As the process of detecting waste material 13, for example, control section 51 performs a process of detecting a region having different brightness from the conveyance surface of conveyance device 22 and setting the region as a region of processing material 12. Further, control section 51 may obtain a region of waste material 13 from the acquired height of the conveyance surface. Further, control section 51 can determine whether foreign matter 14 is present, based on whether the region of foreign matter 14 is present in the captured image (see Fig. 4). Next, control section 51 determines whether foreign matter 14 is present in the captured image of conveyance device 22 (S130). When foreign matter 14 is present in conveyance device 22, control section 51 executes a process of removing foreign matter 14 (S140).

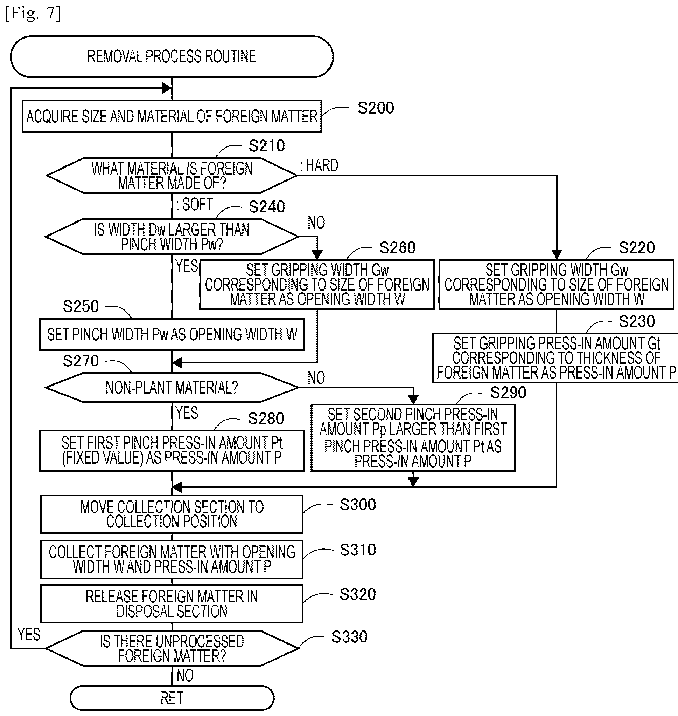

Fig. 7 is a flowchart illustrating an example of a removal process routine executed by control section 51 of control device 50. This routine is stored in storage section 52, and is executed by control section 51 in S140 of the foreign matter removal process routine. When this routine is started, control section 51 first acquires the size and the material of detected foreign matter 14 (S200). Control section 51 acquires the length, the width, and the thickness of foreign matter 14 as the size of foreign matter 14 from the captured image and a measured value of the height obtained by detection section 31. Further, control section 51 acquires the material of foreign matter 14 based on the brightness and the like of the captured image by detection section 31. Control section 51 can acquire the material of foreign matter 14 using a method such as machine learning. After S200, control section 51 determines whether the material of the foreign matter is soft or not soft, that is, hard (S210).

When the material of foreign matter 14 is hard, gripping width Gw corresponding to the size of foreign matter 14 is set to opening width W (S220). Opening width W refers to the width of a distal end of collection member 49 used to collect foreign matter 14. Opening width W is empirically determined to be a value obtained by adding predetermined margin Mw to width Dw of foreign matter 14 (see Fig. 8 described later). After S220, control section 51 sets press-in amount P to gripping press-in amount Gt corresponding to thickness Dt of foreign matter 14 (S230). Press-in amount P is used for collecting foreign matter 14, and refers to the height from an upper surface of foreign matter 14 to the distal end of collection member 49 to be pressed. Press-in amount P is empirically determined to be a value obtained by adding predetermined margin Mt to thickness Dt of foreign matter 14 (see Fig. 8 described later). Margins Mw and Mt may be empirically set to values at which collection member 49 can more reliably grip foreign matter 14.

On the other hand, when the material of foreign matter 14 is soft, control section 51 determines whether width Dw of foreign matter 14 is larger than pinch width Pw (S240). When width Dw is larger than pinch width Pw, control section 51 sets pinch width Pw, which is a fixed value, based on the provision different from gripping width Gw, as press-in amount P (S250). Pinch width Pw is opening width W of collection member 49 such that soft and thin foreign matter 14 is pinched up, and is set to a value generally smaller than gripping width Gw. On the other hand, only when width Dw of foreign matter 14 is smaller than pinch width Pw, control section 51 sets gripping width Gw corresponding to the size of foreign matter 14 as opening width W as an exception when collecting the soft material (S260). In removal section 40, even when foreign matter 14 is the soft material, when width Dw is smaller than pinch width Pw, foreign matter 14 is more reliably gripped using gripping width Gw corresponding to width Dw of foreign matter 14.

After S260 or S250, control section 51 determines whether the material of foreign matter 14, which is the soft material, is non-plant material (S270). When the material of foreign matter 14 is non-plant material, control section 51 sets first pinch press-in amount Pt, which is a fixed value, based on the provision different from gripping press-in amount Gt as press-in amount P (S280). Pinch press-in amount Pt is a press-in amount of collection member 49 such that soft and thin foreign matter 14 is pinched up, and is set to a value generally smaller than gripping press-in amount Gt used for foreign matter 14 which is the three-dimensional object and the hard material. On the other hand, when the material of foreign matter 14, which is the soft material, is the plant, control section 51 sets, as press-in amount P, second pinch press-in amount Pp that is a press-in amount based on the provision different from the provision when foreign matter 14 is not soft and that is larger than when foreign matter 14 is not the plant (S290). Control section 51 ensures more reliable collection of foreign matter 14, when foreign matter 14 is the plant, by pressing collection member 49 by an amount generally smaller than gripping press-in amount Gt used for foreign matter 14, which is the three-dimensional object and is the hard material, and larger than other soft foreign matters 14.

After S280, S290, and S230, control section 51 moves collection member 49 to the collection position of foreign matter 14 (S300), opens collection member 49 to set opening width W, presses collection member 49 in the Z-axis direction with press-in amount P, closes collection member 49 from opening width W, and causes collection member 49 to collect foreign matter 14 (S310). Subsequently, control section 51 moves collection member 49 above disposal section 36 to release foreign matter 14 (S320). Then, control section 51 determines whether there is unprocessed foreign matter 14 (S330). When there is unprocessed foreign matter 14, control section 51 executes the processes of S200 and the subsequent steps, and when there is no unprocessed foreign matter 14, control section 51 terminates this routine .

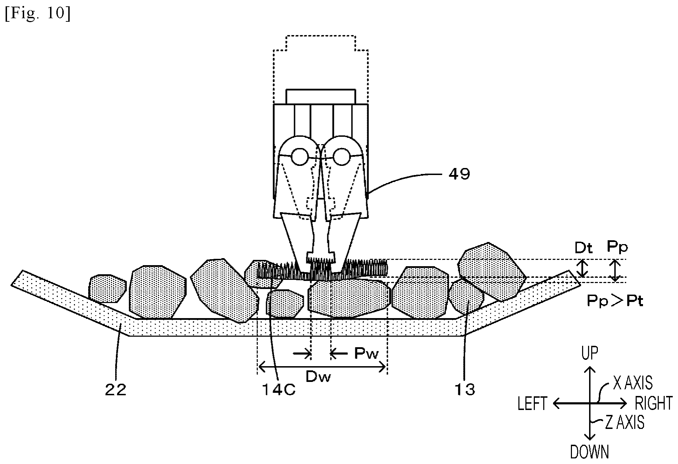

Fig. 8 is a diagram illustrating collection of hard foreign matter 14A. Fig. 9 is a diagram illustrating collection of soft, non-plant foreign matter 14B. Fig. 10 is a diagram illustrating collection of foreign matter 14C of the soft plant. As illustrated in Fig. 8, for hard foreign matter 14A, control section 51 closes collection member 49 from gripping width Gw obtained by adding margin Mw to width Dw, and presses collection member 49 by gripping press-in amount Gt obtained by adding margin Mt to thickness Dt to cause collection member 49 to grip foreign matter 14A. In addition, as illustrated in Fig. 9, for foreign matter 14B that is the soft, non-plant material and has width Dw larger than pinch width Pw, control section 51 closes collection member 49 from pinch width Pw that is a fixed value, presses collection member 49 with first pinch press-in amount Pt that is a fixed value not related to thickness Dt, and causes collection member 49 to grip foreign matter 14B. Further, as illustrated in Fig. 10, for foreign matter 14C that is the soft material of the plant and has width Dw larger than pinch width Pw, control section 51 closes collection member 49 from pinch width Pw that is a fixed value, presses collection member 49 with second pinch press-in amount Pp larger than first pinch press-in amount Pt that is a fixed value not related to thickness Dt, and causes collection member 49 to grip foreign matter 14C. Furthermore, in soft foreign matters 14B and 14C having width Dw smaller than pinch width Pw, control section 51 closes collection member 49 from gripping width Gw corresponding to width Dw and causes collection member 49 to grip foreign matters 14B and 14C. As described above, in foreign matter removal device 30, the removal of foreign matter 14 is executed using a more appropriate collection condition depending on the material of foreign matter 14.

Now, returning to the description of the foreign matter removal process routine of Fig. 6, after the removal process is executed in S140 or when the foreign matter detection timing has not arrived in S110, control section 51 determines whether a process of regenerating processing material 12 for removing foreign matter 14 from waste material 13 has been completed (S150). When the process of regenerating processing material 12 has not been completed, control section 51 repeatedly executes the processes of S110 and the subsequent steps. On the other hand, when the process of regenerating processing material 12 has been completed in S150, control section 51 stops conveyance device 22 (S160), and terminates this routine.

Here, a correspondence relationship between the elements of the present embodiment and the elements of the present disclosure will be clarified. Detection section 31 of the present embodiment corresponds to an example of a detection section of the present disclosure, collection member 49 corresponds to an example of a collection member, and control section 51 corresponds to an example of a control section. Further, conveyance device 22 corresponds to an example of a conveyance device, processing material 12 corresponds to an example of a target object, foreign matter 14 corresponds to an example of a foreign matter, pinch width Pw corresponds to an example of a pinch width, and first pinch press-in amount Pt and second pinch press-in amount Pp correspond to examples of a pinch press-in amount. In the present embodiment, an example of the foreign matter removal method of the present disclosure is also clarified by describing the operation of foreign matter removal device 30.

Foreign matter removal device 30 described above includes detection section 31 that detects the object conveyed in conveyance direction D by conveyance device 22, and removal section 40 that grips foreign matter 14 contained in processing material 12 as the target object conveyed in conveyance direction D by conveyance device 22 with collection member 49. Foreign matter removal device 30 includes control section 51 that causes, when the material of foreign matter 14 detected by detection section 31 is soft, collection member 49 to grip foreign matter 14 from pinch width Pw that is opening width W of collection member 49 based on the provision different from the provision when foreign matter 14 is not soft. Further, foreign matter removal device 30 includes control section 51 that causes, when the material of foreign matter 14 detected by detection section 31 is soft, collection member 49 to grip foreign matter 14 with the pinch press-in amount that is press-in amount P of collection member 49 based on the provision different from the provision when foreign matter 14 is not soft. In foreign matter removal device 30, when the material of foreign matter 14 is soft, opening width W of collection member 49 is set as pinch width Pw, and foreign matter 14 is gripped to be pinched up, so that soft foreign matter 14 can be gripped more reliably, and an object other than foreign matter 14 is less likely to be collected. Alternatively, in foreign matter removal device 30, when the material of foreign matter 14 is soft, most of foreign matters 14 has a small thickness, and thus foreign matter 14 is gripped to be pinched up by using the press-in amount of collection member 49 as the pinch press-in amount, so that soft foreign matter 14 can be more reliably gripped, and an object other than foreign matter 14 is less likely to be collected. Therefore, with foreign matter removal device 30, foreign matter 14 can be more reliably removed from the target object, and the collection of the target object can be further reduced.

In addition, when the material of foreign matter 14 detected by detection section 31 is soft, control section 51 causes foreign matter 14 to be gripped with pinch width Pw and causes the foreign matter to be gripped with the pinch press-in amount. In foreign matter removal device 30, since pinch width Pw and the pinch press-in amount are used, soft foreign matter 14 can be gripped more reliably, and an object other than foreign matter 14 is less likely to be collected. Therefore, with foreign matter removal device 30, it is possible to more reliably remove the foreign matter from the target object, and to further reduce the collection of the target object. Further, when the material of foreign matter 14 is soft, control section 51 grips foreign matter 14 from pinch width Pw that is not related to the size of foreign matter 14, and thus can more reliably grip soft foreign matter 14 using pinch width Pw that is not related to the size of foreign matter 14. In foreign matter removal device 30, when the material of foreign matter 14 is not soft, control section 51 causes foreign matter 14 to be gripped with gripping width Gw corresponding to the size of foreign matter 14. In foreign matter removal device 30, for foreign matter 14 that is not soft, foreign matter 14 can be gripped more reliably with gripping width Gw corresponding to the size of foreign matter 14. Control section 51 causes foreign matter 14 to be gripped from pinch width Pw when the material of foreign matter 14 is soft and width Dw of foreign matter 14 is equal to or larger than pinch width Pw, and causes foreign matter 14 to be gripped with gripping width Gw corresponding to the size of foreign matter 14 only when the material of foreign matter 14 is soft and width Dw of foreign matter 14 is smaller than pinch width Pw. In foreign matter removal device 30, even soft foreign matter 14 smaller than pinch width Pw can be more reliably collected in consideration of width Dw.

In addition, when the material of foreign matter 14 is soft, control section 51 causes foreign matter 14 to be gripped with the pinch press-in amount that is not related to thickness Dt of foreign matter 14. In foreign matter removal device 30, soft foreign matter 14 can be more reliably gripped with the pinch press-in amount that is not related to the thickness of foreign matter 14. In foreign matter removal device 30, when the material of foreign matter 14 is not soft, control section 51 causes foreign matter 14 to be gripped with gripping press-in amount Gt corresponding to thickness Dt of foreign matter 14. In foreign matter removal device 30, for foreign matter 14 that is not soft, foreign matter 14 can be gripped more reliably with gripping press-in amount Gt corresponding to thickness Dt of foreign matter 14. In addition, when the material of foreign matter 14 is soft and is the plant, control section 51 causes collection member 49 to grip foreign matter 14 with the press-in amount of collection member 49 based on the provision different from the provision when foreign matter 14 is not soft and with second pinch press-in amount Pp larger than that when foreign matter 14 is not the plant. In foreign matter removal device 30, since a plant having low strength among soft foreign matters 14 is pressed deeper than other soft foreign matters 14, it is possible to more reliably grip foreign matter 14 by further suppressing breakage, tearing, or the like. In foreign matter removal device 30, control section 51 causes foreign matter 14 to be gripped with first pinch press-in amount Pt that is not related to thickness Dt of foreign matter 14 when the material of foreign matter 14 is soft and is not the plant, and causes foreign matter 14 to be gripped with second pinch press-in amount Pp that is larger than first pinch press-in amount Pt and is not related to the thickness of foreign matter 14 when the material of foreign matter 14 is soft and is the plant. In foreign matter removal device 30, soft foreign matter 14 can be gripped by switching multiple pinch press-in amounts.

In addition, control section 51 regards foreign matter 14 of one or more of a plant other than wood, cloth, a fiber, a resin film, or paper as having the soft material. With foreign matter removal device 30, it is possible to further reduce the collection of the target object with respect to these soft objects. In addition, control section 51 regards foreign matter 14 of one or more of a resin of a three-dimensional object such as a resin bottle, rubber, metal, and wood such as raw wood and plywood as having the hard material. Further, removal section 40 removes foreign matter 14 from waste material 13 as the target object. With foreign matter removal device 30, when the foreign matter is removed from waste material 13, the collection of the target object can be further reduced.

It goes without saying that the present disclosure is not limited to the above-described embodiment in any way, and the present disclosure can be embodied in various aspects without departing from the technical scope of the present disclosure.

For example, in the above-described embodiment, soft foreign matter 14 is removed using pinch width Pw and the pinch press-in amount, but either of pinch width Pw or the pinch press-in amount may be omitted. Also in foreign matter removal device 30, it is possible to further reduce the collection of waste material 13 when foreign matter 14 is removed from waste material 13 as the target object by using either pinch width Pw or the pinch press-in amount.

In the above-described embodiment, foreign matter 14 is collected with gripping width Gw corresponding to width Dw only when width Dw is smaller than pinch width Pw for soft foreign matter 14, but the exception process may be omitted, and foreign matter 14 may be collected from pinch width Pw regardless of width Dw for soft foreign matter 14. Also in foreign matter removal device 30, it is possible to further reduce the collection of waste material 13 when foreign matter 14 is removed from waste material 13 as the target object.

In the above-described embodiment, when soft foreign matter 14 is the plant, foreign matter 14 is collected with second pinch press-in amount Pp larger than first pinch press-in amount Pt, but the present disclosure is not particularly limited thereto, and the use of second pinch press-in amount Pp may be omitted. Also in foreign matter removal device 30, it is possible to further reduce the collection of waste material 13 when foreign matter 14 is removed from waste material 13 as the target object. When the plant which is soft foreign matter 14 is collected, it is preferable to use second pinch press-in amount Pp because foreign matter 14 can be more reliably removed.

In the above-described embodiment, when foreign matter 14 is not soft, gripping width Gw and gripping press-in amount Gt corresponding to the size of foreign matter 14 are used, and when foreign matter 14 is soft, pinch width Pw and the pinch press-in amount that are fixed values are used, but the present disclosure is not particularly limited thereto. For example, foreign matter removal device 30 may use the pinch width smaller than the gripping width when foreign matter 14 is soft, or may use the pinch press-in amount smaller than the gripping press-in amount when foreign matter 14 is soft.

In the above-described embodiment, foreign matter 14 of one or more of a plant other than wood, cloth, a fiber, a resin film, or paper is regarded as a soft material, but the present disclosure is not particularly limited thereto, and any one or more of these may be excluded, or any other material may be contained as a soft material. Whether foreign matter 14 is the soft material can be changed in accordance with the performance of foreign matter removal device 30 or the like.

In the above-described embodiment, foreign matter removal device 30 removes foreign matter 14 from waste material 13 as the target object, but the present disclosure is not particularly limited thereto, and foreign matter 14 may be removed from a target object other than waste material 13.

In the above-described embodiment, the present disclosure has been described as processing system 10 including foreign matter removal device 30, but the present disclosure is not particularly limited thereto, and the present disclosure may be foreign matter removal device 30 itself, may be a control method for foreign matter removal device 30 executed by a computer, may be a foreign matter removal method, or may be a program of the control method and/or the foreign matter removal method. However, processing system 10 includes primary crusher 15, primary magnetic separator 16, screen machine 17, secondary crusher 18, secondary magnetic separator 19, and supervisory device 27, but the present disclosure is not limited thereto, and one or more of these may be omitted, or a device other than these may be added.

Here, the foreign matter removal method of the present disclosure may be configured as follows. For example, a foreign matter removal method according to the present disclosure is
a foreign matter removal method executed by a computer of a foreign matter removal device including a detection section configured to detect an object conveyed in a conveyance direction by a conveyance device, and a removal section configured to grip, using a collection member, a foreign matter contained in a target object conveyed in the conveyance direction by the conveyance device, the foreign matter removal method including:
a step of, when a material of the foreign matter detected by the detection section is soft, causing the collection member to grip the foreign matter with a pinch width that is an opening width of the collection member based on a provision different from a provision when the foreign matter is not soft, and/or causing the collection member to grip the foreign matter with a pinch press-in amount that is a press-in amount of the collection member based on a provision different from a provision when the foreign matter is not soft.

With this foreign matter removal method, similarly to the foreign matter removal device described above, the opening width of the collection member is set as the pinch width, and/or the press-in amount of the collection member is set as the pinch press-in amount, and the soft foreign matter is gripped to be pinched up, so that the soft foreign matter can be gripped more reliably, and an object other than the foreign matter is less likely to be collected. Therefore, with the foreign matter removal method, it is possible to further reduce the collection of the target object when removing the foreign matter from the target object. In the foreign matter removal method, various aspects of the foreign matter removal device described above may be adopted, and a step of achieving each function of the foreign matter removal device described above may be added.

The present description also discloses a technical idea in which "The foreign matter removal device according to claim 1 or 2" in claim 5 as originally filed is changed to "The foreign matter removal device according to any one of claims 1 to 4", a technical idea in which "The foreign matter removal device according to claim 1 or 2" in claim 6 as originally filed is changed to "The foreign matter removal device according to any one of claims 1 to 5", a technical idea in which "The foreign matter removal device according to claim 1 or 2" in claim 8 as originally filed is changed to "The foreign matter removal device according to any one of claims 1 to 7", a technical idea in which "The foreign matter removal device according to claim 1 or 2" in claim 10 as originally filed is changed to "The foreign matter removal device according to any one of claims 1 to 9", and a technical idea in which "The foreign matter removal device according to claim 1 or 2" in claim 11 as originally filed is changed to "The foreign matter removal device according to any one of claims 1 to 10".

### Industrial Applicability

The present disclosure can be used in the technical field of a device that removes a foreign matter from a target object.

### Reference Signs List

10: processing system, 12: processing material, 13: waste material, 14: foreign matter, 15: primary crusher, 16: primary magnetic separator, 17: screen machine, 18: secondary crusher, 19: secondary magnetic separator, 20 to 25: conveyance device, 30: foreign matter removal device, 31: detection section, 32: imaging section, 33: measurement section, 35: support section, 36: disposal section, 40: removal section, 41: X-axis slider, 43: Y-axis slider, 45: collection section, 46: lifting and lowering section, 48: removal head, 49: collection member, 50: control device, 51: control section, 52: storage section, 53: condition information, 71: captured image, 72: captured image, D: conveyance direction, M: worker, W: opening width, P: press-in amount, Dw: width, Dt: thickness, Gw: gripping width, Gt: gripping press-in amount, Mw, Mt: margin, Pw: pinch width, Pt: first pinch press-in amount, Pp: second pinch press-in amount.

## Claims

1. A foreign matter removal device comprising:
a detection section configured to detect an object conveyed in a conveyance direction by a conveyance device;
a removal section configured to grip, using a collection member, a foreign matter contained in a target object conveyed in the conveyance direction by the conveyance device; and
a control section configured to, when a material of the foreign matter detected by the detection section is soft, cause the collection member to grip the foreign matter with a pinch width that is an opening width of the collection member based on a provision different from a provision when the foreign matter is not soft, and/or cause the collection member to grip the foreign matter with a pinch press-in amount that is a press-in amount of the collection member based on a provision different from a provision when the foreign matter is not soft.

2. The foreign matter removal device according to Claim 1, wherein the control section is configured to, when the material of the foreign matter detected by the detection section is soft, cause the collection member to grip the foreign matter with the pinch width and to grip the foreign matter with the pinch press-in amount.

3. The foreign matter removal device according to Claim 1 or 2, wherein the control section is configured to, when the material of the foreign matter is soft, cause the collection member to grip the foreign matter with the pinch width that is not related to a size of the foreign matter.

4. The foreign matter removal device according to Claim 3, wherein the control section is configured to, when the material of the foreign matter is not soft, cause the collection member to grip the foreign matter with a gripping width corresponding to the size of the foreign matter.

5. The foreign matter removal device according to Claim 1 or 2, wherein the control section is configured to cause the collection member to grip the foreign matter with the pinch width when the material of the foreign matter is soft and a width of the foreign matter is equal to or larger than the pinch width, whereas the control section is configured to cause the collection member to grip the foreign matter with the gripping width corresponding to a size of the foreign matter only when the material of the foreign matter is soft and the width of the foreign matter is smaller than the pinch width.

6. The foreign matter removal device according to Claim 1 or 2, wherein the control section is configured to, when the material of the foreign matter is soft, cause the collection member to grip the foreign matter with the pinch press-in amount that is not related to a thickness of the foreign matter.

7. The foreign matter removal device according to Claim 6, wherein the control section is configured to, when the material of the foreign matter is not soft, cause the collection member to grip the foreign matter with a gripping press-in amount corresponding to the thickness of the foreign matter.

8. The foreign matter removal device according to Claim 1 or 2, wherein the control section is configured to, when the material of the foreign matter is soft and the foreign matter is a plant, cause the collection member to grip the foreign matter with the press-in amount of the collection member based on the provision different from the provision when the foreign matter is not soft and with the pinch press-in amount larger than a pinch press-in amount when the foreign matter is not the plant.

9. The foreign matter removal device according to Claim 8, wherein the control section is configured to cause the collection member to grip the foreign matter with a first pinch press-in amount that is not related to a thickness of the foreign matter when the material of the foreign matter is soft and the foreign matter is not the plant, and cause the collection member to grip the foreign matter with a second pinch press-in amount that is larger than the first pinch press-in amount that is not related to the thickness of the foreign matter when the material of the foreign matter is soft and the foreign matter is the plant.

10. The foreign matter removal device according to Claim 1 or 2, wherein the control section is configured to regard the foreign matter of one or more of a plant other than wood, cloth, a fiber, a resin film, or paper as having a soft material.

11. The foreign matter removal device according to Claim 1 or 2, wherein the removal section is configured to remove the foreign matter from a waste material as the target object.

12. A foreign matter removal method executed by a computer of a foreign matter removal device including a detection section configured to detect an object conveyed in a conveyance direction by a conveyance device, and a removal section configured to grip, using a collection member, a foreign matter contained in a target object conveyed in the conveyance direction by the conveyance device, the foreign matter removal method comprising:
a step of, when a material of the foreign matter detected by the detection section is soft, causing the collection member to grip the foreign matter with a pinch width that is an opening width of the collection member based on a provision different from a provision when the foreign matter is not soft, and/or causing the collection member to grip the foreign matter with a pinch press-in amount that is a press-in amount of the collection member based on a provision different from a provision when the foreign matter is not soft.
